**Europäisches Patentamt**

**European Patent Office**

**Office européen des brevets**

(11) Veröffentlichungsnummer: **0 115 010**
**A1**

# (12) EUROPÄISCHE PATENTANMELDUNG

(21) Anmeldenummer: **83112739.4**

(22) Anmeldetag: **17.12.83**

(51) Int. Cl.³: **B 60 P 3/32**

(30) Priorität: **31.12.82 DE 3248716**

(43) Veröffentlichungstag der Anmeldung:
**08.08.84 Patentblatt 84/32**

(84) Benannte Vertragsstaaten:
**AT BE CH DE FR GB IT LI LU NL SE**

(71) Anmelder: **Klein, Albrecht**
**Hammer Weg 11 a**
**D-4770 Soest(DE)**

(72) Erfinder: **Klein, Albrecht**
**Hammer Weg 11 a**
**D-4770 Soest(DE)**

(74) Vertreter: **Fritz, Herbert, Dipl.-Ing.**
**Mühlenberg 74**
**D-5760 Arnsberg 1(DE)**

(54) **Vorrichtung zum Ausrüsten von Kastenwagen mit Möbeln (Kombiwagen, Kleinbusse).**

(57) Die Möbel für Ausrüstung eines Kastenwagens sind auf einem linken und einem rechten Schieberahmen montiert, die in Querrichtung verschiebbar auf einem rechteckigen Grundrahmen angebracht sind. Beim einund Ausfahren sind die Schieberahmen (20) mit den Möbeln im wesentlichen deckungsgleich mit dem Grundrahmen (10) eingestellt und gesichert. In dieser Stellung besteht die Möglichkeit den gesamten Rahmenkomplex von hinten durch die Ladetür in den Innenraum eines Kastenwagens einzuschieben. Nach der Sicherung des Grundrahmens werden die beiden Schieberahmen mit den Möbeln jeweils zur Seite geschoben, soweit die Innenwände es erlauben, und dann gesichert. Auf den Grundrahmen wird zwischen den Schieberahmen eine Fläche zum Begehen frei, die mit einer Bodenplatte abgedeckt werden kann.

Croydon Printing Company Ltd.

./...

Fig. 1

Fig. 2

- 1 -

======================================================
"Vorrichtung zum Ausrüsten von Kastenwagen
mit Möbeln (Kombiwagen, Kleinbusse)"
======================================================

Die Aufgabe der Erfindung ist im folgenden zu sehen:

Mit Hilfe einer Vorrichtung nach der Erfindung soll es möglich sein, Kastenwagen, wie Kombiwagen, Kleinbusse und der gleichen in den üblichen Standardausführungen eines beliebigen Fabrikates kurzfristig mit Möbeln für spezielle Zwecke auszurüsten, sodaß der Kastenwagen als Wohnmobil, Werkstattmobil oder Verkaufsmobil oder für ähnliche Zwecke eingesetzt werden kann.

Die Lösung dieser Aufgabe ergibt sich durch eine Vorrichtung mit den Merkmalen der Patentansprüche.

Bei einer solchen Vorrichtung ist die Inneneinrichtung, also das Mobilar auf den beiden Schieberahmen angebracht, die auf einem Grundrahmen gehalten sind. Der gesamte Rahmenkomplex wird über eine rückseitige Tür in das Fahrzeug eingeschoben oder eingerollt und dann gegenüber dem Fahrzeugboden gesichert. Die beiden Schieberahmen mit den Möbeln werden dann jeweils zur Seite geschoben, soweit es die Innenbreite des Fahrzeuges erlaubt, und in der ausgeschobenen, überkragenden Stellung ebenfalls gesichert. Im mittleren Bereich des Grundrahmens ist dabei eine begehbare Fläche frei geworden, die durch einen Fußboden-

- 2 -

belag abgedeckt werden kann. In dem frei gewordenen Raum können Personen Platz nehmen und die Möbelstücke benutzen. Dafür können Küchenteile, Schrankteile, Sitz- oder Liegebänke, Tische, Verkaufstische oder Regale eingesetzt werden.

Zur Herstellung einer verschiebbaren Verbindung zwischen Grundrahmen und dem Schieberahmen sind Schienen und Rollensätze vorgesehen. Als Schienen kommen bevorzugt Profilstäbe mit quadratischem Querschnitt infrage, die zur Führung der Rollen einen Schlitz aufweisen.

Nach einer bevorzugten Ausführungsform dienen die beiden endseitigen Querholme des Grundrahmens als Schienen. Auf den beiden Längsholmen des Grundrahmens sind jeweils drei Rollensätze fest angebracht, je zwei in den Endbereichen und einer im mittleren Bereich. Dementsprechend sind auch die Schienen und die Rollensätze der Schieberahmen angeordnet. Dabei ergibt sich eine gleichmäßige Lastverteilung.

Wenn man gemäß der weiteren Erfindung für die Längsholme des Grundrahmens Profilstäbe mit rechteckigem Querschnitt nimmt, der an der Unterfläche einen Schlitz aufweist, so kann man in einfacher Weise im Innern der Längsholme vorderseitig Rollen anbringen, die ein Einrollen des Grundrahmens ermöglichen. Auch können Längsholme in dieser Gestalt vorstehende Stützfüße zum Abstützen aufnehmen.

Die Lage des Grundrahmens kann durch vier Querholme gesichert werden, die teleskopartig ausziehbar von den beiden Querholmen des Grundrahmens aufgenommen werden und eine Abstützung an der Fahrzeug-Innenwand ermöglichen. Darüberhinaus kann mit Hilfe von Büchsen eine Verbindung zwischen den ausziehbaren

- 3 -

Querholmen und dem Fahrzeugboden hergestellt werden zur weiteren Lagesicherung des Grundrahmens.

Weiterhin ist gemäß der Erfindung im mittleren Bereich außenseitig an den Schieberahmen jeweils eine Stützvorrichtung in Gestalt eines ausfahrbaren Stützbeines vorgesehen. Zumindest ein Rollensatz eines jeden Schieberahmens hat gemäß der weiteren Erfindung eine Vorrichtung zum Blockieren der Schiebebewegung in eine beliebige Stellung. Das Festlegen der Schiebebewegung erfolgt dadurch, daß ein Riegel an der unteren Stirnfläche eines drehbar gelagerten Bolzens im Bereich eines Loches einer Lochreihe der Schiene quer zur Fahrrichtung eingestellt wird. Das Einstellen des Riegels kann mit Hilfe eines Hebels am Bolzen in einfacher Weise von Hand vorgenommen werden.

- 4 -

Im folgenden wird ein Ausführungsbeispiel der Erfindung beschrieben unter Bezugnahme auf die Zeichnungen.

Fig. 1    ist eine Draufsicht auf den Grundrahmen einer Vorrichung nach der Erfindung (Schieberahmen sind gestrichelt angedeutet);

Fig. 2    ist ein Schnitt nach II-II von Fig. 1, wobei die Schieberahmen auch eingezeichnet sind, auf der einen Seite ausgefahren, auf der anderen Seite eingefahren;

Fig. 3 und
     4    sind Schnitte nach III-III und IV-IV von Fig. 1;

Fig. 5    stellt eine Draufsicht auf einen Schieberahmen dar;

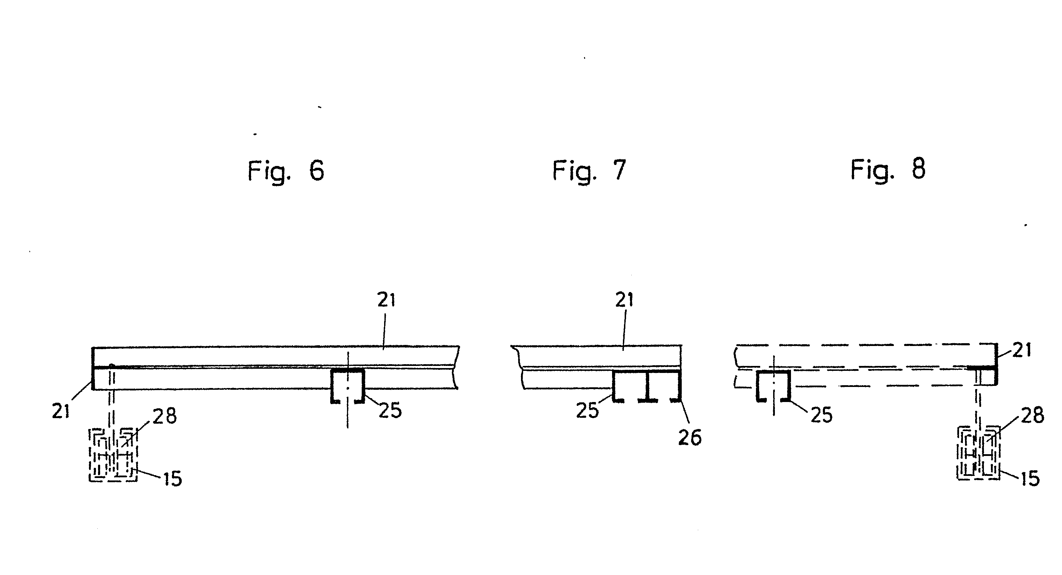

Fig. 6 bis
     8    sind im vergrößerten Maßstab Schnitte nach VI-VI, VII-VII und VIII-VIII von Fig. 5;

Fig. 9    zeigt im vergrößerten Maßstab einen Schnitt durch einen Querholm des Grundrahmens nach IX-IX von Fig. 1;

Fig. 10   ist eine Draufsicht auf den Querholm nach Fig. 9;

Fig. 11   ist ein Schnitt durch die Stützvorrichtung eines Schieberahmens nach IX-IX von Fig. 5;

Fig. 12   stellt eine Ansicht von Fig. 11 dar.

Die Vorrichtung besteht im wesentlichen aus einem rechteckigen Grundrahmen 10 und zwei spiegelgleich angeordneten Schieberahmen 20, die nebeneinander auf dem Grundrahmen angebracht sind. Die Schieberahmen können in eine Einrollstellung gebracht werden, in der sie im wesentlichen deckungsgleich mit dem Grundrahmen liegen. Sie können außerdem in eine Gebrauchsstellung verschoben werden, in der sie jeweils an einer Seite des Grundrahmens ein Stück vorstehen. Für die schiebbare Verbindung zwischen Grundrahmen und den Schieberahmen sind Schienen und Rollensätze vorgesehen.

Die Möbel für die Ausrüstung des Innenraumes des Kastenwagens sind auf den Schieberahmen angebracht. Beim Einrollen der Vorrichtung in den Kastenwagen sind die Schieberahmen deckungsgleich zum Grundrahmen eingestellt und gesichert. Der gesamte Komplex der Rahmen wird von hinten über die Ladetür in den Innenraum des Kastenwagens eingeschoben. Die Lage des Grundrahmens im Innenraum wird gesichert. Alsdann werden die Schieberahmen mit den Möbeln jeweils seitlich ausgeschoben, soweit es die Innenbreite des Raumes erlaubt. Entsprechend den Radkästen im Bodenbereich sind an den Schieberahmen Ausnehmungen vorgesehen. Die Stellung der Schieberahmen wird in der ausgefahreren Stellung festgelegt. Dabei wird auf dem Grundrahmen eine ausreichend große Bodenfläche frei zum Auftreten. Diese Fläche kann mit einem Bodenbelag abgedeckt werden.

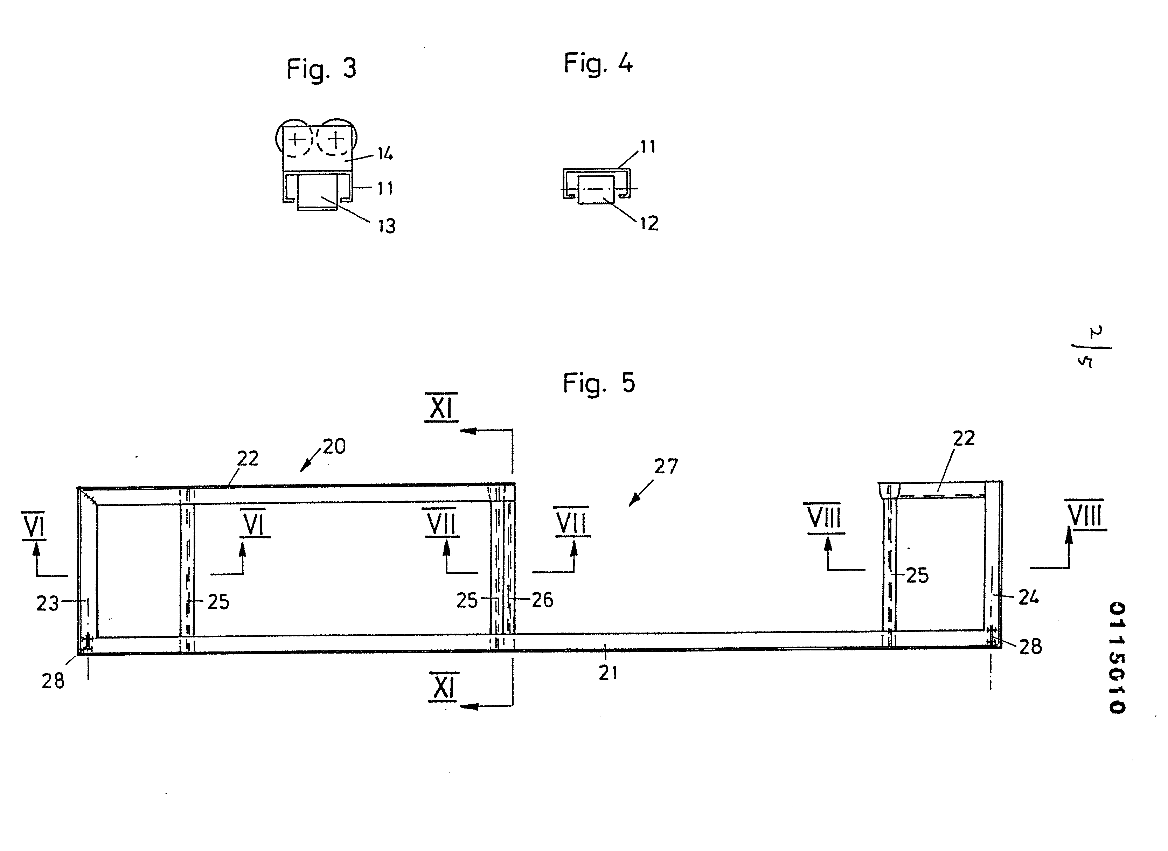

Der Grundrahmen besteht aus den beiden Längsholmen 11, die endseitig durch die Querholme 15 verbunden sind. Die Längsholme 11 sind Profilstäbe mit rechteckigem Querschnitt (Fig. 3), die an einer längeren Rechteck-

- 6 -

seite, die unten liegt, offen sind. In den Längsholmen sind starre Stützfüße 13 angebracht, die unten
vorstehen, sodaß sich der Grundrahmen auf den Stützfüßen am Fahrzeugboden abstützen kann. Gleichfalls
nehmen die Längsholme 11 Rollen 12 auf (Fig. 4), die
aber nur vorderseitig angebracht sind. Über die Rollen kann der gesamte Grundrahmen mit dem Schieberahmen über den Fahrzeugboden gerollt werden.

Die Querholme 15 des Grundrahmens sind Profilstäbe
mit quadratischem Querschnitt, die ebenfalls an einer
Wand einen Schlitz aufweisen. Der Schlitz ist oben,
sodaß die Querholme als Schienen zur Führung der
Schieberahmen dienen können. Mittig ist an den Querholmen eine Montageöffnung 15a vorgesehen, zum Einführen der Rollensätze der Schieberahmen. Die Länge
16 der Querholme 15 bestimmt das maximale Breitenmaß des Grundrahmens. Es ist so bemessen, daß es
kleiner ist als die Ladetür des Fahrzeuges und kleiner als der Abstand zwischen den Radsätzen.

Auf den Längsholmen 11 sind jeweils drei Rollensätze 14 zur Führung der Schieberahmen angebracht.
Die Querholme 15 neben teleskopartig ausfahrbar
weitere Querholme 17 auf. Diese dienen dazu nach dem
Einfahren des Grundrahmens dessen Lage durch Abstützen an den Fahrzeugseitenwänden festzulegen.
Die Querholme 17 können durch eine Klemmschraube 18
in ihrer Stützlage fixiert werden.

Die beiden hinteren Klemmschrauben 18 haben Ösen.
Dort können Traggriffe eingesteckt werden, die es
erlauben die Vorrichtung wie einen Schubkarren in den
Innenraum des Kastenwagens einzuschieben.

Mit Hilfe von vier Büchsen 19 kann eine Verbindung zwischen den ausziehbaren Querholmen 17 und dem Fahrzeugboden hergestellt werden. Die Büchsen haben jeweils eine Ankerschraube 154 zum Einschrauben in eine am Fahrzeugboden angeschweißte Mutter 156. Die ausziehbaren Querholme 17 werden jeweils von einer Büchse aufgenommen und mit einer Klemmschraube 153 in der Büchse festgeklemmt.

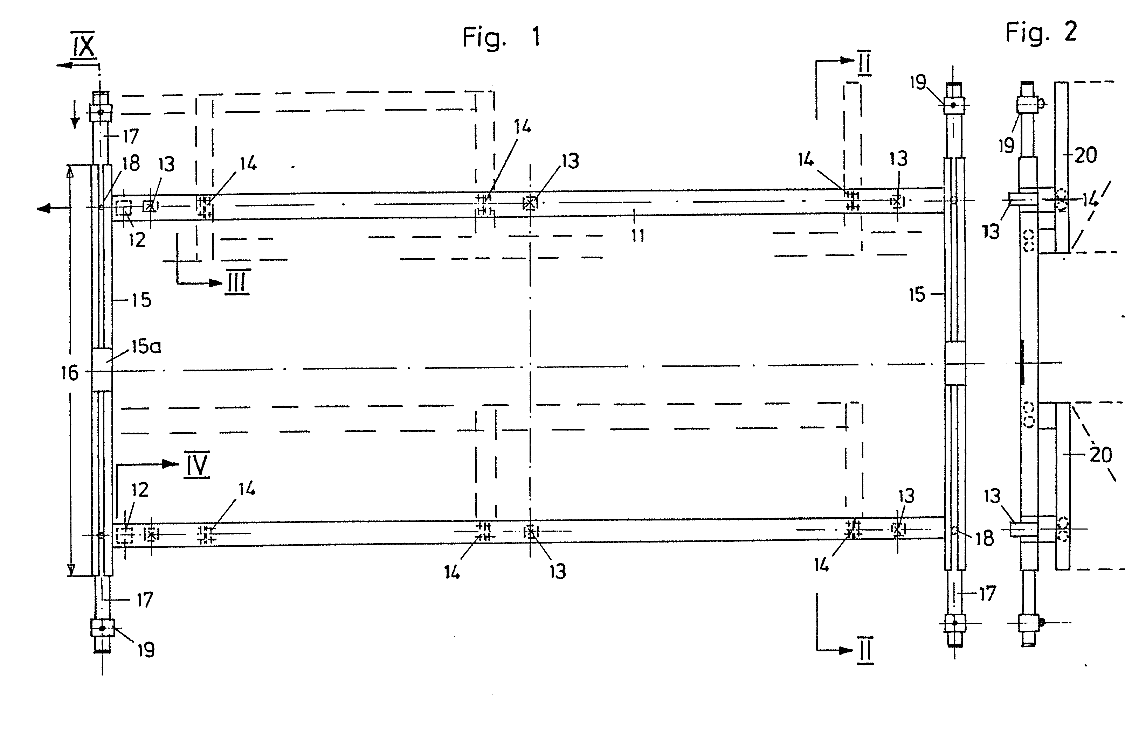

Fig. 2 zeigt unten einen Schieberahmen 20 in der Einrollstellung, wo er im wesentlichen seitlich nicht gegenüber dem Grundrahmen 10 vorsteht. Die auskragende Stellung des Schieberahmens 20 zeigt Fig. 2 in der oberen Abbildung.

Auf jedem Längsholm 11 des Grundrahmens ist jeweils ein Rollensatz 14 mittig und im Endbereich angebracht.

Die Schieberahmen (Fig. 5) haben die gleiche Länge wie der Grundrahmen. Ihre Breite ist jedoch geringer und beträgt etwa 1/3 bis 1/2 der Breite des Grundrahmens. Jeder Schieberahmen besteht aus einem inneren Längsholm 21, der sich über die gesamte Länge erstreckt und äußeren Längsholmen 22. Diese sind im Bereich des Radkastens unterbrochen, sodaß eine Ausnehmung 27 entsprechend der Größe des Radkastens entsteht.

In Querrichtung sind die Holme 21 und 22 durch Querholme 23, 25 und 26 verbunden. Im hinteren Bereich gehen vom Längsholm 21 weitere Querholme 24 und 25 aus. Die Querholme 25 sind als Schienen ausgebildet. Der Querholm 26, der etwa in halber Länge angeordnet ist, ist ebenfalls als Rohr mit quadratischem Querschnitt ausgebildet zur Aufnahme einer Stützvorrichtung. Die Querholme 23 und 24, ebenso wie die beiden Längsholme, sind T-Profilstäbe. In den beiden inneren Eckbereichen sind, nach unten gerichtet, Rollensätze 28 angeschweißt.

Die beiden Rollensätze 28 werden von den Schienen 15 des Grundrahmens aufgenommen. Die Schienen 25 eines jeden Schieberahmens nehmen die Rollensätze 14 am Grundrahmen auf.

In den horizontalen Stegen und in den Flanschen der Holme 21, 22, 23 und 24 sind Bohrungen zur Montage der Möbel vorgesehen.

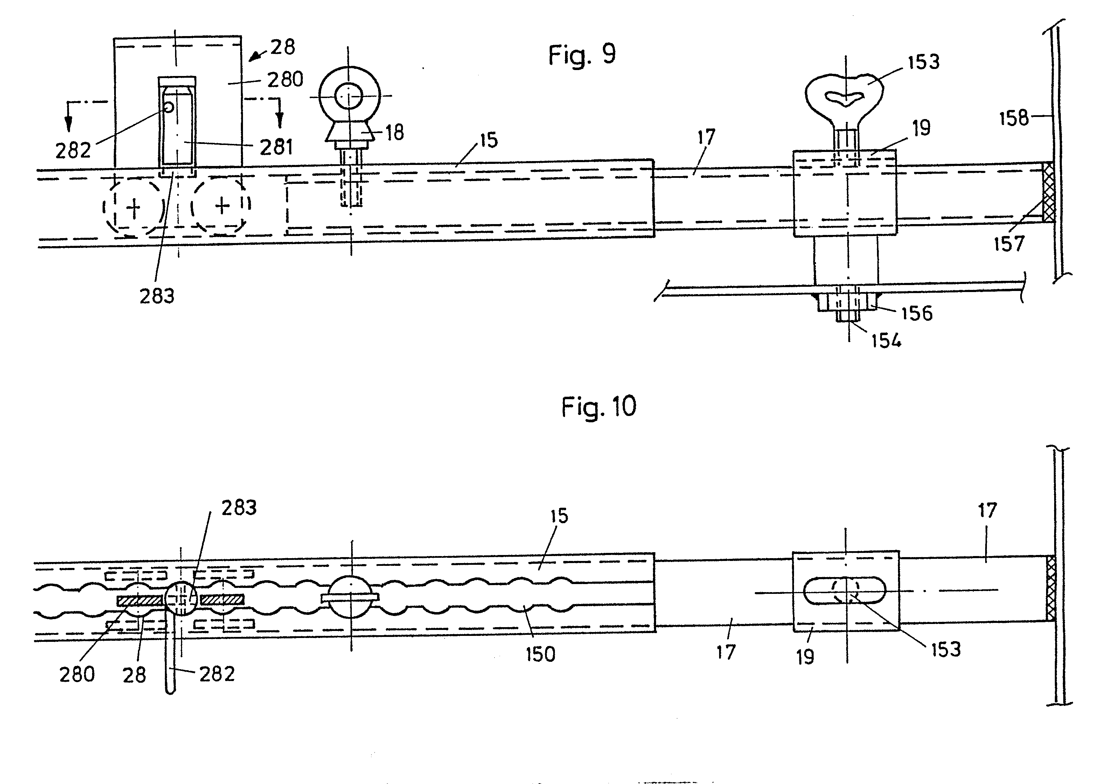

Nunmehr wird auf Fig. 9 und 10 Bezug genommen. Zur Abstützung des Grundrahmens an den Fahrzeug-Seitenwänden dienen die ausfahrbaren Querholme 17, die jeweils teleskopartig vom Querholm 15 aufgenommen werden. Zur Sicherung der Abstützlage sind jeweils Klemmschrauben 18 vorgesehen, zu deren Aufnahme in der oberen Wand der Schiene, wo der Führungsschlitz ist, eine Lochreihe 150 gebildet ist. Die Abstützfläche des Querholmes 17 wird durch eine Kappe 157 gebildet.

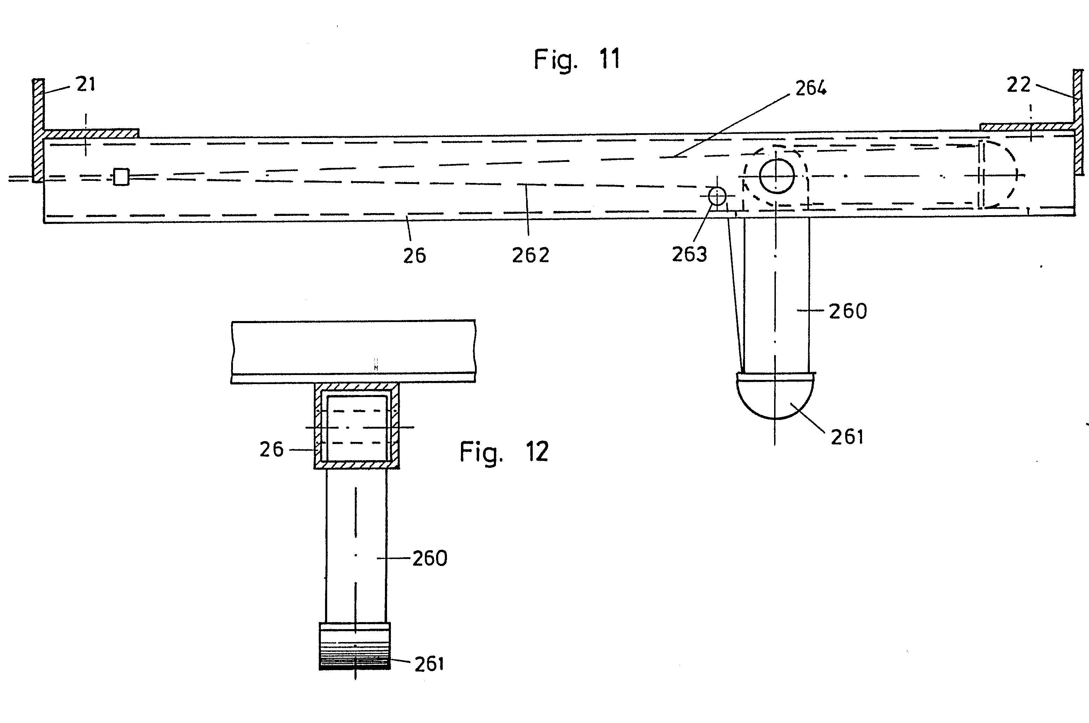

Fig. 11 und 12 zeigen eine Stützvorrichtung, mit der jeder Schieberahmen, wenn er ausgefahren ist, in halber Länge abgestützt werden kann. Zur Aufnahme der Stützvorrichtung ist ein Rohr 26 vorgesehen. In dessen Endbereich ist schwenkbar ein Stützbein 260 mit einer Kappe 261 gelagert. Beim Einrollen der Vorrichtung ist das Stützbein in das Rohr 26 geschwenkt. Wenn der Schieberahmen ausgefahren ist, dann wird das Stützbein 260 ausgeschwenkt, d. h. in eine lotrechte Stellung gebracht. Das Schwenken des Stützbeines in die eine oder andere Stellung erfolgt durch Seilzüge 262, die über Umlenkrollen 263 laufen.

Mindestens ein Rollensatz 28 eines jeden Schieberahmens ist mit einer Feststellvorrichtung ausgerüstet, mit dessen Hilfe das Hin- und Herfahren des Schieberahmens in jeder Stellung blockiert werden kann. Ein Schenkel 280 des Rollensatzes 28 nimmt drehbar mit lotrechter Achsanordnung einen Bolzen 281 auf. An der unteren Stirnfläche des Bolzens ist ein Riegel 283 ausgebildet, der in Höhe des Schlitzes der Schiene 15 liegt. Wenn der Riegel in Längsrichtung des Schlitzes steht, dann kann sich der Rollensatz bewegen. Um die Bewegung zu blockieren, wird der Riegel durch Drehen des Bolzens im Bereich eines Loches der Lochreihe 150 quergestellt. Zur Handbetätigung ist am Bolzen 281 ein Hebel 282 befestigt.

- 10 -

Patentansprüche

1. Vorrichtung zum Ausrüsten von Kastenwagen mit Möbeln gekennzeichnet durch die folgenden Merkmale:

- sie besteht aus einem Grundrahmen (10), rechteckig mit einer Länge entsprechend dem Kastenraum und einer Breite etwas geringer als die Breite der Ladetür, zwischen die Radkästen passend, mit bodenseitigen Stützelementen (13) und Elementen zur Sicherung der Lage;

- der Grundrahmen nimmt zwei gleiche Schieberahmen (20) auf, von der gleichen Länge wie der Grundrahmen, jedoch etwa von der 1/2 bis 1/3 Grundrahmenbreite, zum Anbringen von Möbeln geeignet;

- die Schieberahmen (20) sind mittels Schienen (15, 25) und Rollensätzen mit dem Grundrahmen verbunden, in eine deckungsgleiche Stellung schiebbar (Einrollstellung) und in eine seitlich auskragende Stellung schiebbar und in jeder Schiebestellung feststellbar;

- an den beiden Schieberahmen ist jeweils freier Raum (27) entsprechend den Radkästen gebildet.

2. Vorrichtung nach Anspruch 1, dadurch gekennzeichnet, daß am Grundrahmen endseitig Querholme (15) als Schienen ausgebildet sind, und daß Rollensätze (14) auf Längsholmen (11) des Grundrahmens jeweils im mittleren und in den beiden Endbereichen befestigt sind, wobei zugeordnete Schienen (25) und Rollensätze (28) auf den Schieberahmen angebracht sind.

3. Vorrichtung nach Anspruch 1, dadurch gekennzeichnet, daß unten an den Längsholmen (11) des Grundrahmens starre Stützfüße (13) angebracht sind.

4. Vorrichtung nach Anspruch 1, dadurch gekennzeichnet, daß an jedem Längsholm (11) des Grundrahmens vorderseitig eine unten vorstehende Rolle (12) vorgesehen ist.

5. Vorrichtung nach Anspruch 1, dadurch gekennzeichnet, daß die Längsholme (11) Profilstäbe mit rechteckigem oder quadratischem Querschnitt sind, die unten einen Schlitz aufweisen.

6. Vorrichtung nach Anspruch 1, dadurch gekennzeichnet, daß die Querholme (15) teleskopartig ausfahrbar und feststellbare Querholme (17) aufnehmen.

7. Vorrichtung nach Anspruch 6, dadurch gekennzeichnet, daß jeder Querholm (17) in eine Büchse (19) einsteckbar ist, die mittels einer Ankerschraube (154) in den Fahrzeugboden einschraubbar ist, und die eine Klemmschraube (153) hat.

8. Vorrichtung nach Anspruch 1, dadurch gekennzeichnet, daß jeder Schieberahmen (20) etwa in halber Länge einen Querholm (26) hat, der ein durch Schwenken aufstellbares Stützbein (260) aufnimmt.

- 12 -

9. Vorrichtung nach Anspruch 1, dadurch gekennzeichnet, daß zumindest ein Rollensatz (28) eines Schieberahmens (20) eine Feststellvorrichtung mit nachfolgenden Merkmalen aufweist:

  - an einem Schenkel (280) des Rollensatzes ist drehbar und mit lotrechter Achsanordnung ein Bolzen (281) gelagert;

  - an einer Stirnfläche des Bolzens ist ein Riegel (283) gebildet, der in Höhe des Schlitzes der Schiene (15) liegt;

  - der Schlitz der Schiene ist durch eine Lochreihe (150) erweitert.

10. Vorrichtung nach Anspruch 1, dadurch gekennzeichnet, daß im hinteren Querholm (15) zwei Schrauben mit Ösen eingeschraubt sind.

Fig. 1    Fig. 2

0115010

Fig. 3

14

11

13

Fig. 4

11

12

Fig. 5

XI

22

20

27

VI

VI

VII

VII

VII

VIII

VIII

22

23

25

25

26

25

24

28

28

XI

21

28

0115010

Fig. 6 Fig. 7 Fig. 8

21

21

21

21

21

25

25

26

25

28

15

28

15

3/5

0115010

Fig. 9

Fig. 10

# Fig. 11

21    264    22

26    262    263

264

260

261

# Fig. 12

26

260

261

5/5

0115010

**Europäisches Patentamt**

# EUROPÄISCHER RECHERCHENBERICHT

EP 83 11 2739

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | FR-A-2 398 639 (HEULIEZ) <br> * ganzes Dokument * <br><br> --- | 1 | B 60 P 3/32 |
| A | US-A-4 163 577 (VANDERSLICE) <br><br> --- | | |
| A | FR-A-2 497 164 (WITTENDAL) <br><br> --- | | |
| A | FR-A-2 049 440 (AIRCIEL) <br><br> --- | | |
| A | US-A-2 784 027 (TEMP) <br><br> ----- | | |

**RECHERCHIERTE SACHGEBIETE (Int. Cl. ³)**

B 60 P

Der vorliegende Recherchenbericht wurde für alle Patentansprüche erstellt.

| Recherchenort <br> DEN HAAG | Abschlußdatum der Recherche <br> 27-03-1984 | Prüfer <br> PIRIOU J.C. |
|---|---|---|